# FASCICULE DE BREVET EUROPEEN

(11) **EP 2 090 056 B1**
(45) Date de publication et mention de la délivrance du brevet: **27.09.2017**
(21) Numéro de dépôt: 07858595.7
(22) Date de dépôt: 16.10.2007
(51) Int. Cl.: H04L 29/06, H04W 60/04, H04W 48/02

(54) **SYSTEME DE CONTROLE D'ACCES A UN SERVICE, PROCEDE, DISPOSITIF DE CONTROLE ET PROGRAMME D'ORDINATEUR CORRESPONDANTS**
SYSTEM ZUR KONTROLLE DES ZUGANGS ZU EINEM DIENST UND ENTSPRECHENDES VERFAHREN, STEUEREINRICHTUNG UND COMPUTERPROGRAMM
SYSTEM FOR CONTROLLING ACCESS TO A SERVICE, AND CORRESPONDING METHOD, CONTROL DEVICE, AND COMPUTER PROGRAMME

(30) Priorité: 17.10.2006 FR 0654328
(43) Date de publication de la demande: 19.08.2009
(73) Titulaire: 3G Licensing S.A., 2132 Luxembourg (LU)
(72) Inventeur: BERNARD, Emmanuelle, 75015 Paris (FR); AVELINE, Sophie, 75015 Paris (FR)
(74) Mandataire: Camolese, Marco
(86) Numéro de dépôt international: PCT/FR2007/052169
(87) Numéro de publication internationale: WO 2008/047041

(56) Documents cités:
- WO-A-00/54537
- WO-A-03/096732
- US-A1- 2002 111 166

## Description

### 1. Domaine de l'invention

Le domaine de l'invention est celui des radiocommunications. Plus précisément, l'invention concerne un système de contrôle d'accès à un service, proposé par un opérateur de réseau de communication.

Elle s'applique notamment, mais non exclusivement, aux systèmes de communication dits de deuxième ou troisième génération, tels que les systèmes GSM, GPRS ou UMTS, ainsi qu'à leurs évolutions, mais également aux systèmes de communication mettant en oeuvre une technologie d'accès de type CDMA ("Code Division Multiple Access" pour "accès multiple par répartition de code").

### 2. Art antérieur et ses inconvénients

Un réseau de téléphonie mobile, par exemple de type UMTS ("Universal Mobile Telecommunication System" pour système de télécommunication mobile universel), est classiquement constitué d'un réseau d'accès radio, comprenant une pluralité de bornes publiques d'accès, appelées stations de base, et d'un réseau coeur, qui assure la gestion du service offert et l'acheminement des communications vers les réseaux fixes tels que le réseau public de téléphonie fixe, le réseau Internet, etc. Un tel réseau de téléphonie mobile est généralement organisé en cellules, associées chacune à une station de base, et qui sont de taille variable en fonction de la densité d'utilisateurs, de la géographie du terrain, de la puissance de la station de base associée, etc. Dans un réseau de type GSM par exemple, les cellules adjacentes du réseau utilisent des fréquences porteuses distinctes.

Chaque réseau de téléphonie mobile est géré par un opérateur, est associé à une zone géographique (classiquement un Etat), et est identifié par un code PLMN (pour "Public Land Mobile Network") qui lui est propre.

Un terminal mobile ne peut accéder qu'au réseau de téléphonie mobile géré par l'opérateur auprès duquel il a souscrit un abonnement, ou éventuellement à un autre réseau avec lequel son opérateur a passé des accords réciproques de "roaming" (ou itinérance). Après s'être connecté à un réseau PLMN sur lequel il est autorisé, le terminal mobile écoute les signaux en provenance des différentes bornes d'accès qu'il reçoit, sélectionne le signal reçu de meilleure qualité, et s'attache à la cellule dont il provient.

Cette écoute est réalisée par le terminal de façon quasi-permanente, de sorte que, dès qu'il détecte un signal en provenance d'une nouvelle borne d'accès (ou station de base), il mesure certains paramètres de ce signal reçu, afin de déterminer s'il est ou non de meilleure qualité que le signal en provenance de la cellule à laquelle il est actuellement connecté. Dans l'affirmative, et si le terminal est en mode veille (mode "idle"), il peut quitter sa cellule courante pour s'attacher à la cellule dont il reçoit un signal de meilleure qualité.

Lorsque le terminal est en mode connecté (i.e. une communication est en cours), le réseau lui demande de remonter des mesures sur les cellules "voisines". Le réseau peut alors donner l'ordre au terminal mobile de changer de cellule. En pratique, un tel mécanisme, appelé "handover", se produit principalement lors des déplacements du terminal mobile qui le conduisent à entrer ou sortir d'une cellule, dont la taille, dans un réseau de type GSM ou UMTS par exemple, est classiquement comprise entre 100 m et 30 km.

Le développement actuel des réseaux de communication mobile s'oriente aujourd'hui vers l'offre de services de convergence entre les réseaux de téléphonie fixes (tels que le réseau de téléphonie public RTC ("réseau de transport commuté) ou le réseau Internet) et les réseaux mobiles.

Dans ce cadre, certains opérateurs envisagent de proposer à leurs clients, particuliers ou entreprises, une couverture radio (de deuxième 2G, troisième génération 3G ou au-delà B3G) à leur domicile, ou dans l'enceinte de l'entreprise, par exemple sous la forme d'une borne d'accès radio privée (résidentielle ou restreinte à l'entreprise), qui serait connectée à un modem ADSL (pour "Asynchronous Digital Subscriber Line") ou à tout autre équipement d'accès à un réseau à haut débit (par exemple de type FTTH pour "Fiber To The Home"). Par la suite, et par souci de simplification, on désigne par borne d'accès radio privée l'ensemble constitué par la borne d'accès à proprement parler et l'équipement d'accès à un réseau haut débit auquel elle est connectée.

Chaque particulier pourrait ainsi disposer de sa propre borne d'accès radio résidentielle, à laquelle serait associée une liste d'abonnés autorisés à y accéder (membres de la famille, amis, ...). Un mécanisme de contrôle d'accès pourrait interdire l'accès à cette borne privée aux utilisateurs ne figurant pas sur cette liste.

De même, dans le cadre professionnel, une entreprise pourrait disposer d'une ou plusieurs bornes d'accès radio situées sur son site, et dont l'accès serait limité aux seuls salariés de l'entreprise, et interdite par exemple aux visiteurs.

Les demandes de brevet WO 00/54537 et US2002/0111166 divulguent un tel système de bornes d'accès radio privées, dans lequel un utilisateur dont le terminal mobile tente de s'attacher à l'une de ces bornes alors qu'il n'y est pas autorisé reçoit un message de rejet lui interdisant l'accès radio dans la zone de localisation ("Location Area") où est située cette borne.

L'introduction d'un tel service de couverture radio résidentielle pose cependant le problème de la multiplication du nombre de bornes d'accès au réseau de communication de l'opérateur, un grand nombre de bornes d'accès privées étant susceptibles de venir s'ajouter aux bornes d'accès publiques de type stations de base déjà déployées par l'opérateur.

Un terminal mobile en déplacement dans le réseau de communication de l'opérateur détecterait en effet fréquemment de nouveaux signaux en provenance de bornes d'accès publiques ou privées, à proximité desquelles il se trouve et auxquelles il pourrait donc être tenté de s'attacher.

Ainsi, un terminal mobile en déplacement dans une zone pavillonnaire ou dans un immeuble dans lesquels tous les logements seraient équipés de bornes d'accès privées au service aurait tendance à tenter de s'attacher successivement sur chacune de ces bornes, dès qu'il détecte que le signal de l'une d'entre elles est d'un niveau suffisant.

Or, pendant toute la phase au cours de laquelle un terminal mobile tente de s'attacher à une borne d'accès radio, se fait éventuellement rejeter en cas de refus d'accès, puis tente un nouvel attachement, ce dernier est injoignable du réseau de communication; en effet, pendant cette période, dont la durée est classiquement de l'ordre de la seconde, le terminal mobile cesse d'écouter les signaux émis dans la zone dans laquelle il est marqué comme enregistré au niveau du réseau.

Si ces tentatives d'attachement infructueuses à des bornes d'accès privées ou publiques se répètent trop fréquemment, l'utilisateur du terminal mobile peut perdre des appels qui lui sont destinés, ce qui est particulièrement néfaste.

Ceci s'avère particulièrement problématique pour les utilisateurs de terminaux mobiles qui ne seraient pas abonnés à ce nouveau service de couverture radio résidentielle. En effet, l'introduction d'un grand nombre de bornes d'accès privées auxquelles ils ne pourraient être autorisés à accéder, faute d'abonnement, perturberait le fonctionnement de leurs terminaux mobiles et dégraderait leurs performances en induisant de multiples tentatives d'attachement des terminaux à ces bornes d'accès privées.

Il existe donc un besoin d'une technique qui permette à un opérateur de réseau de communication de proposer un nouveau service de couverture radio résidentielle à ses abonnés, sans que l'introduction de ce nouveau service ne vienne perturber les utilisateurs du réseau qui ne seraient pas eux-mêmes abonnés.

### 3. Exposé de l'invention

L'invention répond à ce besoin en proposant un système de contrôle d'accès à un service, accessible via une pluralité de bornes privées d'accès à un réseau de communication, qui comprend:
- des moyens d'agrégation desdites bornes privées en un réseau d'accès dédié audit service (PLMN);
- des moyens d'association d'une zone de localisation distincte (LA) à chacune desdites bornes privées;
- des moyens, activés lors d'une procédure de mise à jour de localisation initiée par un terminal d'utilisateur:
   - de détermination d'une catégorie à laquelle appartient ledit utilisateur;
   - de contrôle d'accès dudit terminal d'utilisateur à l'une desdites bornes privées, en fonction de la catégorie déterminée.

En outre, selon l'invention, en cas de refus d'accès du terminal d'utilisateur à l'une des bornes privées, les moyens de contrôle d'accès sont aptes à envoyer au terminal un message de refus comprenant une cause de rejet qui est fonction de la catégorie déterminée pour ledit utilisateur.

Ainsi, l'invention propose, grâce aux moyens d'agrégation du système de contrôle d'accès, de construire un réseau d'accès spécifique à partir des bornes d'accès privées (résidentielles ou d'entreprise), auquel on attribue par exemple un identifiant spécifique et distinct de l'identifiant attribué au réseau d'accès constitué par les bornes d'accès publiques de type stations de base déjà déployées par l'opérateur. En se référant à la terminologie GSM ou UMTS, on attribue donc à ce nouveau réseau constitué des bornes privées, que l'on pourrait qualifier de réseau "microscopique", un code PLMN spécifique, et distinct du code PLMN du réseau "macroscopique" de l'opérateur (constitué des stations de base déployées par l'opérateur mobile). Un tel réseau PLMN "microscopique" peut être défini comme un réseau "équivalent" au réseau "macroscopique" de l'opérateur, au sens de la définition "Equivalent PLMN" de la spécification technique 3GPP TS 24.008 V7.4.0 (2006-06), "3rd Generation Partnership Project; Technical Specification Group Core Network and Terminais; Mobile radio interface Layer 3 specification; Core network protocols; Stage 3 (Release )".

L'invention propose également de paramétrer chaque borne d'accès privée avec une zone de localisation (ou Location Area LA) distincte, tout au moins pour des bornes d'accès privées voisines (on peut en effet tolérer que deux bornes d'accès privées très éloignées l'une de l'autre aient la même zone de localisation). En faisant référence à titre d'exemple à la spécification 3GPP TS 24.008 V7.4.0 ci-dessus, un tel paramétrage a pour conséquence de faire déclencher une procédure de mise à jour de localisation (ou "Location Area Update") à un terminal mobile quand il tente de s'attacher sur une borne résidentielle.

On comprend que, selon l'invention, les zones de localisation LA associées aux bornes résidentielles sont de tailles très petites (typiquement un appartement ou une maison - d'où la dénomination de réseau "micro") par rapport aux zones de localisation LA du réseau "macro" de l'opérateur, qui, dans le système GSM par exemple, sont classiquement constituées d'un ensemble de cellules gérées par un même et unique MSC/VLR ("Mobile Switching Centre/Visitor Location Register").

L'invention propose enfin d'implémenter dans le réseau un mécanisme de contrôle d'accès à ces bornes.

Pour ce faire, le système de l'invention dispose de moyens lui permettant de déterminer une catégorie à laquelle appartient l'utilisateur du terminal mobile (par exemple, la catégorie des abonnés au service de couverture radio résidentielle autorisés à accéder à la borne privée considérée, et la catégorie des utilisateurs qui ne sont pas autorisés à accéder à cette borne. Au sein de cette dernière catégorie, on peut distinguer les abonnés de l'opérateur mobile non abonnés au service de couverture radio résidentielle et les non abonnés de l'opérateur mobile, à savoir les "roamers" nationaux ou internationaux). Le système de l'invention peut alors adapter le mécanisme de contrôle d'accès en fonction de la catégorie de l'utilisateur qu'il a déterminée, notamment, dans le cas des non abonnés au service, réaliser un contrôle d'accès qui soit le moins perturbateur possible et dégrade le moins possible les performances du terminal mobile.

De tels moyens de détermination de la catégorie de l'utilisateur et de contrôle d'accès peuvent être disposés directement dans les bornes d'accès privées, qui sont alors des bornes intelligentes et autonomes.

Ils peuvent également être inclus dans un ou plusieurs contrôleurs associés à ces bornes d'accès privées (qui, dans ce cas, peuvent également inclure, à titre optionnel, les moyens d'agrégation des bornes en réseau PLMN et les moyens d'association des zones de localisation à ces bornes). Ce mode de réalisation permet de décharger les bornes d'accès privées, et donc d'accroître les performances du système.

Ils peuvent enfin être répartis sur ces deux entités: bornes d'accès privées et contrôleurs. On obtient ainsi une répartition équilibrée des tâches, en maintenant dans la borne privée les fonctions qu'elle peut prendre en charge sans ralentir ses performances (par exemple vérifier si l'utilisateur fait partie des abonnés autorisés sur la borne considérée), et en déportant dans le contrôleur les fonctions plus consommatrices en ressources (par exemple déterminer la catégorie de l'utilisateur non autorisé sur la borne, et lui refuser l'accès en fonction de la catégorie déterminée).

En outre, en cas de refus d'accès du terminal d'utilisateur à l'une des bornes privées, on prévoit d'adresser, aux non abonnés au service de couverture radio résidentielle, un message de refus qui les rejette de façon quasi-permanente (i.e. jusqu'à extinction et rallumage du terminal mobile) sur l'ensemble du réseau spécifique constitué par les bornes d'accès privées. Ainsi, après une tentative de connexion infructueuse à une borne d'accès résidentielle, un terminal mobile d'utilisateur non abonné au service ne tentera plus de s'attacher aux éventuelles autres bornes privées rencontrées, de sorte que son fonctionnement sera relativement peu perturbé par l'introduction du nouveau service de couverture radio résidentielle.

Selon l'invention, la détermination de la catégorie à laquelle appartient un utilisateur peut reposer sur une comparaison d'au moins un identifiant de l'utilisateur avec un identifiant de référence associé au service.

Ainsi, le contrôleur ou la borne d'accès privée peut directement discriminer les abonnés au service à partir de leur identifiant (tel que l'IMSI "International Mobile Subscriber Identity"), ce qui est simple et rapide, et ne nécessite pas de consulter une base de données d'abonnés externe. Il suffit que l'identifiant de référence associé au service soit déclaré au niveau du contrôleur ou de la borne privée, pour qu'il en ait connaissance.

En d'autres termes, l'invention propose de rejeter les terminaux utilisateurs en utilisant des causes de rejet différenciées, selon la catégorie de l'utilisateur.

Selon un autre mode de réalisation de l'invention, la détermination de la catégorie à laquelle appartient un utilisateur peut reposer sur une recherche d'un utilisateur dans une base de données des abonnés au service.

Une telle base de données peut être située au niveau du réseau, centralisée et interrogeable par toutes les bornes privées et par tous les contrôleurs dans le cas où plusieurs contrôleurs sont déployés dans le système de l'invention. Ainsi, les utilisateurs présents dans la base sont des abonnés au service et, à l'inverse, tous les utilisateurs absents de cette base sont considérés comme non abonnés au service. Le contrôleur ou la borne privée n'a alors pas besoin de mémoriser l'identifiant de référence du service pour discriminer les abonnés.

La détermination de la catégorie à laquelle appartient un utilisateur peut également reposer sur une combinaison de recherche dans une base de données et d'analyse de l'identifiant de l'utilisateur, selon les deux modes de réalisation exposés ci-dessus.

Dans un mode de réalisation particulier de l'invention, les moyens de détermination d'une catégorie de l'utilisateur sont ainsi aptes à déterminer si ledit utilisateur appartient à une liste d'au moins un utilisateur autorisé à accéder à ladite borne privée.

Notamment, pour accroître les performances de la borne privée ou du contrôleur, on commence par activer les moyens de détermination pour vérifier si l'utilisateur appartient à la catégorie des abonnés autorisés sur la borne privée considérée. C'est seulement en cas de refus d'accès à la borne privée que les moyens de détermination sont ensuite activés pour déterminer plus précisément la catégorie à laquelle appartient l'utilisateur: non abonné au service de couverture radio résidentielle, "roamer" national ou international. Le message de refus d'accès qui est alors émis vers le terminal mobile contient une cause de rejet spécifique à la catégorie déterminée.

L'invention concerne également un procédé de contrôle d'accès à un service, susceptible d'être mis en oeuvre dans un système tel que décrit précédemment.

L'invention concerne encore un dispositif de contrôle (ou contrôleur) de bornes d'accès à un réseau de communication, dans lequel, lesdites bornes d'accès étant des bornes privées d'accès à un service dudit réseau, agrégées en un réseau d'accès dédié audit service, et à chacune desquelles est associée une zone de localisation distincte, ledit dispositif de contrôle est apte à mettre en oeuvre, lors d'une procédure de mise à jour de localisation initiée par un terminal d'utilisateur:
- des moyens de détermination d'une catégorie à laquelle appartient ledit utilisateur;
- des moyens de contrôle d'accès dudit terminal d'utilisateur à l'une desdites bornes privées, en fonction de la catégorie déterminée.

Les moyens mis en oeuvre dans un tel dispositif de contrôle sont similaires à ceux décrits précédemment dans le cadre du système de contrôle d'accès de l'invention.

L'invention concerne également un réseau d'accès à un service, qui comprend:
- une pluralité de bornes privées d'accès audit service, à chacune desquelles est associée une zone de localisation distincte;
- au moins un contrôleur associé auxdites bornes privées, apte à mettre en oeuvre, lors d'une procédure de mise à jour de localisation initiée par un terminal d'utilisateur:
   - des moyens de détermination d'une catégorie à laquelle appartient ledit utilisateur;
   - des moyens de contrôle d'accès dudit terminal d'utilisateur à l'une desdites bornes privées, en fonction de la catégorie déterminée, lesdits moyens de contrôle d'accès étant aptes, en cas de refus d'accès dudit terminal d'utilisateur à l'une desdites bornes privées, à envoyer audit terminal un message de refus comprenant une cause de rejet qui est fonction de la catégorie déterminée pour ledit utilisateur;
- au moins un réseau IP reliant ledit contrôleur auxdites bornes privées.

L'invention concerne enfin un programme d'ordinateur comprenant des instructions de code de programme pour la mise en oeuvre des étapes du procédé de contrôle d'accès décrit précédemment, lorsque ledit programme est exécuté par un ordinateur.

L'invention concerne encore une borne d'accès privée conforme au système de l'invention.

### 4. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 illustre l'architecture du réseau de bornes d'accès privées de l'invention, gérées par un contrôleur jouant un rôle de passerelle entre le réseau d'accès dédié au service de couverture radio résidentielle et le réseau coeur;
- la figure 2 présente plus précisément le mécanisme de contrôle d'accès de l'invention, dans le cadre d'une procédure de mise à jour de localisation initiée par un terminal d'utilisateur.

### 5. Description d'un mode de réalisation particulier de l'invention

Dans le cadre de l'introduction d'un nouveau service permettant d'offrir aux abonnés d'un opérateur une couverture radio résidentielle à partir de bornes d'accès privées, le principe général de l'invention repose sur la construction d'un réseau d'accès dédié à ce service à partir de ces bornes d'accès privées, dont l'architecture permette de réaliser un contrôle d'accès différencié en fonction d'une catégorie de l'utilisateur.

On notera que, dans l'ensemble de ce document, on entend par couverture radio résidentielle une couverture radio accessible depuis une borne d'accès radio privée dont l'accès est restreint à certains abonnés autorisés, que ce soit dans le cadre domestique, associatif ou d'une entreprise.

Dans le cadre de l'invention, on entend par borne d'accès privée, ou Home Gateway HG, un équipement installé chez un utilisateur (particulier, association ou entreprise) qui inclut un accès radio vers le terminal de l'utilisateur et un accès vers le réseau de transport sur IP/DSL ("Internet Protocol/Digital Subscriber Line"). Il peut notamment s'agir d'une passerelle résidentielle connectée au réseau ADSL, équipée d'une antenne radio de type 3G UMTS et qui comprend un module d'interface UMTS/IP entre l'antenne radio et la passerelle résidentielle.

Le contrôle d'accès à ces bornes d'accès privées HG est réalisé dans la borne HG elle-même, et/ou dans un contrôleur, qui est un équipement installé chez l'opérateur, et qui assure la gestion des bornes d'accès privées HG. Tout le trafic de l'utilisateur final de la borne HG (trafic entrant ou sortant) est géré par le contrôleur.

La présente invention est applicable dans les réseaux cellulaires 2G (GSM, GPRS), 3G (UMTS) et leurs évolutions.

Dans le cas des réseaux de deuxième génération, la borne d'accès privée peut être assimilée à la station de base BTS ("Base Transceiver Station") installée chez le client, et le contrôleur est assimilable au contrôleur BSC ("Base Station Controller").

Dans le cas des réseaux de troisième génération, la borne d'accès privée peut être assimilée au NodeB installé chez le client. Elle peut éventuellement contenir des fonctionnalités qui habituellement sont associées aux entités du réseau 3G, tels que le RNC ("Radio Network Controller"), le MSC ("Mobile Switching Center"), ou le SGSN ("Serving GPRS Support Node"). Le contrôleur est assimilable à un RNC, mais, dans un mode de réalisation préférentiel de l'invention, présente des fonctionnalités supplémentaires, relatives au mécanisme de contrôle d'accès de l'invention: en effet, le contrôleur interprète et génère des messages de niveau 3 (couche réseau au sens du modèle international OSI pour "Open System Interconnection") (ou "Non Access Stratum" dans le langage 3GPP), qui sont habituellement, dans un réseau UMTS classique, transportés de manière transparente entre le terminal mobile d'utilisateur et le MSC et/ou le SGSN.

On s'attache désormais dans toute la suite de la description à décrire un mode de réalisation particulier de l'invention dans le cadre d'un réseau UMTS. Dans ce mode de réalisation, on considère que le contrôle d'accès aux bornes privées est réalisé dans un contrôleur, pour des raisons de performance des bornes privées.

On pourrait bien sûr également envisager, à titre de variante, que le contrôle d'accès ne soit réalisé que dans les bornes privées HG elles-mêmes.

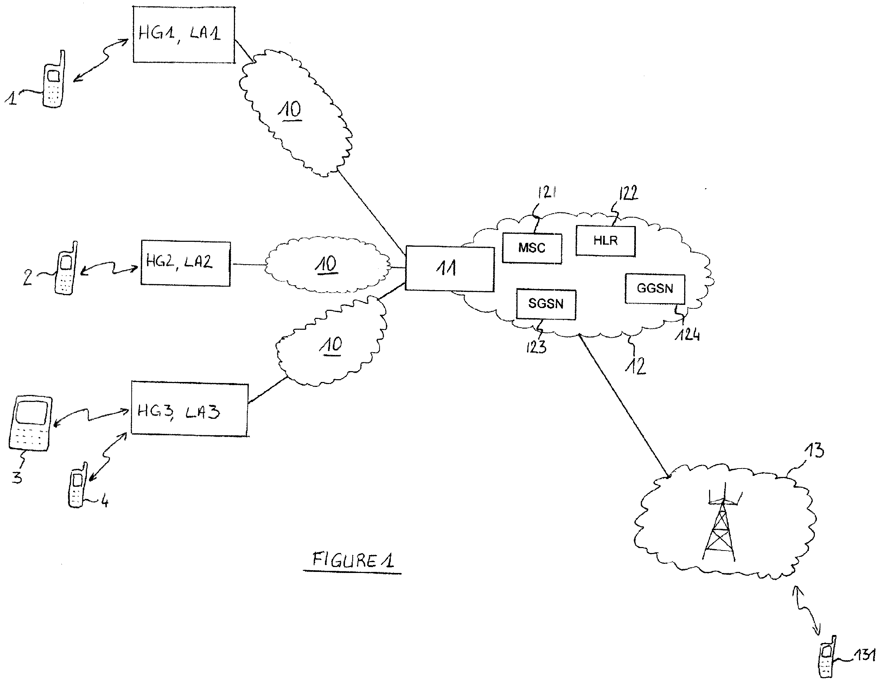

La figure 1 illustre l'architecture d'un réseau d'accès dédié à un service de couverture radio résidentielle, comprenant une pluralité de bornes d'accès privées, dont trois ont été représentées, qui sont référencées HG1, HG2 et HG3.

Un mécanisme de contrôle d'accès est mis en place sur les bornes d'accès privées HG1, HG2 et HG3: à une borne HGi donnée, on associe une liste d'abonnés UMTS (identifiés par leur IMSI) autorisés sur cette borne. Les abonnés ne figurant pas sur cette liste ne sont pas autorisés sur la borne. Dans le cadre d'une borne de type passerelle résidentielle, ces abonnés peuvent comprendre l'ensemble des utilisateurs présents dans le foyer, ainsi que certains parents ou amis de la famille. Dans le cadre d'une borne privée d'entreprise, ces abonnés autorisés correspondent à tout ou partie du personnel de l'entreprise. Dans le cas d'une borne HG installée dans une médiathèque, cette liste d'abonnés autorisés pourrait correspondre à l'ensemble des adhérents à la médiathèque.

Les bornes HGi, i=1...3, sont paramétrées avec des zones de localisation, ou Location Areas LAi, i=1...3, différentes (au moins pour des Home Gateways voisines). Ce paramétrage a pour conséquence de faire déclencher une procédure de "Location Area update" (telle que présentée dans la spécification 3GPP TS 24.008 évoquée ci-dessus) à un terminal mobile référencé 1 à 4 quand il tente de s'attacher sur une borne résidentielle 3G. Selon l'invention, les zones de localisation LAi, i=1...3, ont alors des tailles très petites si on les compare aux zones de localisation LA sur le réseau UMTS "macro" de l'opérateur.

Le déclenchement systématique d'une procédure de mise à jour de localisation par le terminal mobile permet d'instaurer un mécanisme de contrôle d'accès qui rejette les abonnés sur la plus petite unité possible du réseau d'accès dédié au service de couverture radio résidentielle, à savoir la zone de localisation LA.

Les bornes d'accès privées HG1, HG2 et HG3 sont organisées en réseau d'accès dédié au service de couverture radio résidentielle, auquel on attribue un code PLMN distinct du code PLMN affecté au réseau UMTS "macro" de l'opérateur. Ce PLMN peut être déclaré comme "équivalent" au PLMN "macro".

Grâce à cette déclaration d'équivalence des réseaux PLMN, un terminal mobile abonné 1 peut s'attacher sur une cellule associée à une borne privée HG1 avec la même priorité que sur une cellule du réseau UMTS "macro" 13 de l'opérateur. On rappelle en effet qu'un terminal mobile, lors de sa mise sous tension, doit sélectionner manuellement ou automatiquement le réseau PLMN auquel il souhaite accéder. Il détermine son réseau PLMN prioritaire en consultant le code PLMN qui figure dans son IMSI, mémorisé dans sa carte SIM ("Subscriber Identity Module") ou USIM ("UMTS Subscriber Identity Module").

Ainsi, en prenant l'exemple d'un opérateur gérant un réseau UMTS "macro" 13 présentant un code PLMN 208 01, on peut construire un réseau PLMN équivalent à partir des bornes d'accès privées HG1 à HG3 selon le principe de l'invention, auquel on attribue un code PLMN 208 99. Les IMSI en 208 01 des abonnés de l'opérateur n'ont pas à être modifiés (ni donc leurs cartes SIM/USIM changées) pour que les abonnés au service s'attachent indifféremment à une cellule du réseau "macro" 208 01 ou à une cellule associée à une Home Gateway du réseau "micro" 208 99. Dans un cas comme dans l'autre, l'utilisateur peut se considérer "chez lui", au sein d'un réseau géré par l'opérateur auprès duquel il a souscrit son abonnement.

Plus précisément, le système de l'invention comprend des bornes d'accès privées HG1 à HG3, agrégées en réseau d'accès dédié au service de couverture radio résidentielle, qui sont chacune reliées à un contrôleur 11 par le biais d'un réseau IP 10, tel que le réseau mondial Internet, ou un réseau ADSL. Le contrôleur 11 constitue une passerelle entre le réseau d'accès constitué par les bornes privées HG1 à HG3, dont il fait partie, et le réseau coeur 12 de l'opérateur, qui assure la gestion du service offert et l'acheminement des communications vers les réseaux fixes (non représentés sur la figure 1) tels que le réseau public de téléphonie fixe, le réseau Internet, etc.

Le réseau coeur 12 comprend plusieurs entités classiques d'un réseau UMTS, telles que:
- un "Mobile Switching Centre" MSC 121, qui est un commutateur en charge de la gestion des services en mode circuit des stations mobiles 1 à 4 et 131 qui sont enregistrées dans la zone géographique qu'il gère;
- un "Home Location Register" HLR 122, qui est une base de données contenant des informations concernant les conditions d'abonnement de l'utilisateur et les caractéristiques des services souscrits. Elle contient également des informations grossières sur la localisation de l'abonné (telles que le MSC ou le SGSN sur lequel est localisé l'abonné);
- un "Serving GPRS Support Node" SGSN 123 qui transfère les données en mode paquet vers Internet, vers des réseaux intranet ou vers les plates-formes de services (et inversement). Cette mise en relation s'effectue via une passerelle de routage des données appelée "Gateway GPRS Support Node" GGSN 124.

Leurs rôles et fonctions sont identiques à ceux d'un réseau UMTS traditionnel et ne seront donc pas décrits ici plus en détail.

On a également représenté sur la figure 1 le réseau UMTS "macro" de l'opérateur, sous la forme d'un réseau d'accès 13 constitué de bornes d'accès publiques, à savoir des stations de base, accessibles depuis une pluralité de terminaux mobiles d'utilisateur 131, ce réseau d'accès 13 étant connecté au réseau coeur 12.

Chaque borne d'accès privée HG1 à HG3 est accessible à un ou plusieurs terminaux d'abonnés autorisés. Par exemple, seul le terminal mobile 1 est autorisé sur la borne HG1, à l'exclusion de tous les autres terminaux mobiles représentés sur la figure 1, qu'ils soient abonnés au service de couverture radio résidentielle (cas des terminaux 2 et 3-4 qui sont respectivement autorisés sur les bornes HG2 et HG3) ou non abonnés à ce service (cas du terminal mobile 131).

Dans un premier mode de réalisation, la liste des terminaux autorisés sur une borne d'accès privée HGi donnée est mémorisée au niveau du contrôleur 11 dans une base de données dédiée.

Dans un deuxième mode de réalisation, cette liste est par exemple stockée dans une base de données du réseau, et chargée dans la borne d'accès privée HGi lors de sa mise sous tension, qui peut ainsi la mémoriser localement.

Les terminaux mobiles illustrés sur la figure 1 peuvent comprendre un terminal de radiocommunication cellulaire mobile, un assistant numérique personnel communicant PDA, ou un ordinateur portable communicant, ou encore un téléphone intelligent ("SmartPhone" en anglais), pouvant communiquer avec le réseau de l'opérateur. Il s'agit de terminaux mobiles UMTS classiques, qui n'ont à subir aucune altération pour pouvoir être utilisés dans le cadre de l'invention.

Le mécanisme de contrôle d'accès aux bornes HG1 à HG3 est mis en oeuvre dans le contrôleur 11, et consiste à différentier les abonnés UMTS tentant de s'attacher au système UMTS Home Gateway de l'invention, afin de les rejeter de manière différente.

On définit par exemple les catégories d'abonnés suivantes:
- les abonnés de l'opérateur mobile (UMTS), abonnés au service de couverture radio résidentielle (à savoir sur la figure 1 les utilisateurs des terminaux référencés 1 à 4);
- les abonnés de l'opérateur mobile (UMTS), non abonnés à ce service, par exemple le terminal mobile référencé 131 ;
- les non abonnés de l'opérateur mobile (UMTS), c'est-à-dire les "roamers" internationaux ou nationaux.

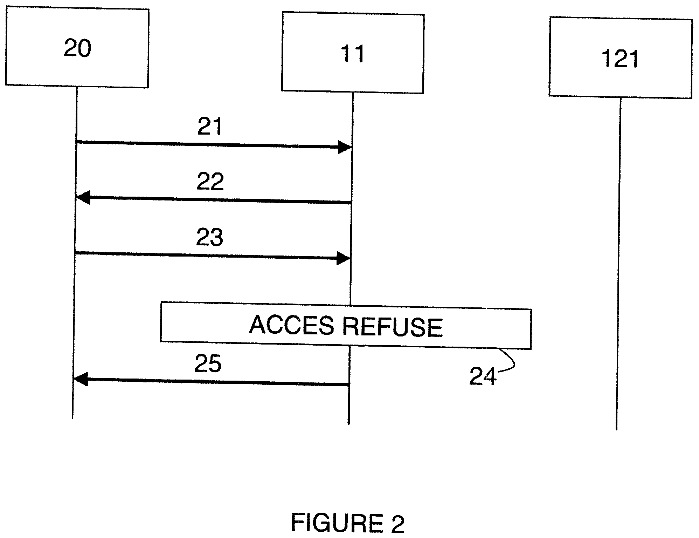

On décrit désormais plus particulièrement en relation avec la figure 2 le mécanisme de rejet des abonnés, dans le cadre d'une procédure de mise à jour de localisation initiée par un terminal mobile. Une telle mise à jour de localisation, ou Location Updating Procedure, est notamment présentée dans la spécification 3GPP TS 24.008 évoquée ci-dessus, à laquelle on pourra se référer pour plus d'informations sur son mode de fonctionnement.

Cette procédure de mise à jour de localisation est initiée par un terminal mobile d'utilisateur 20 lorsqu'il tente de s'attacher à une borne résidentielle HG1, HG2 ou HG3, du fait que le système de l'invention repose sur l'association d'une zone de localisation LA1 à LA3 distincte pour chacune des bornes d'accès privées.

Le terminal mobile 20 émet une requête 21 de mise à jour de localisation intitulée "Location Updating Request (SSN=0)" à destination du contrôleur 11, qui en réponse, demande 22 au terminal mobile 20 son identité, par un message "Identity Request (IMSI)". Cette requête 21 est transmise du terminal mobile 20 vers le contrôleur 11 par l'intermédiaire de la borne d'accès privée (non représentée sur la figure 2) à laquelle le terminal 20 tente de s'attacher, et du réseau IP 10.

Le terminal mobile 20 communique alors 23 au contrôleur 11 son IMSI par un message "Identity Response (IMSI, SSN=1)".

Le contrôleur 11 détermine alors si l'utilisateur du terminal mobile 20 fait ou non partie de la liste des abonnés autorisés à accéder à la borne d'accès privée considérée, en comparant son IMSI aux IMSI des abonnés figurant sur la liste des utilisateurs autorisés sur la borne. Dans ce mode de réalisation, cette liste est mémorisée dans le contrôleur 11, dans une base de données comprenant un ensemble de couples (IMSI, HGi) associant une borne d'accès privée HGi gérée par le contrôleur 11 et l'identifiant IMSI d'un abonné autorisé à y accéder. Si l'utilisateur du terminal mobile 20 ne fait pas partie de la liste des abonnés autorisés, l'accès à la borne est refusé 24.

Dans un autre mode de réalisation, la liste des abonnés autorisés à accéder à une borne d'accès privée est mémorisée dans la borne elle-même (par exemple, stockée dans le réseau et téléchargée dans la borne lors de son allumage, pour des raisons de performances). Dans ce cas, qui n'est pas représenté sur la figure 2, la requête 21 de mise à jour de localisation envoyée par le terminal mobile 20 est reçue par la borne d'accès privée, qui en réponse, demande 22 au terminal mobile 20 son identité, par un message "Identity Request (IMSI)". La borne d'accès privée compare alors l'IMSI reçu à la liste des abonnés autorisés, mémorisée en local. Si l'utilisateur du terminal mobile 20 ne fait pas partie de la liste des abonnés autorisés, l'accès à la borne est refusé. La borne transfère alors au contrôleur 11 la requête 21 du terminal mobile 20, éventuellement associée à son IMSI.

On notera que dans ce deuxième mode de réalisation, le contrôle d'accès à proprement parler est réparti sur les deux noeuds constitués par la borne d'accès privée et le contrôleur.

D'autres variantes pourraient bien sûr être envisagées pour la mémorisation de la liste des abonnés autorisés sur une borne.

Le contrôleur 11 détermine alors plus précisément la catégorie à laquelle appartient l'utilisateur du terminal mobile 20. Pour ce faire, deux modes de réalisation principaux peuvent être envisagés.

Dans un premier mode de réalisation, le contrôleur 11 identifie les "roamers" internationaux et nationaux par leur IMSI. On rappelle en effet que l'IMSI est l'identité permanente du mobile auprès du réseau et est constitué:
- de l'indicatif du pays domicile de l'abonné, à savoir le MCC ("Mobile Country Code") codé sur 3 digits;
- de l'indicatif du PLMN nominal de l'abonné, à savoir le MNC ("Mobile Network Code") codé sur 2 digits;
- du numéro de l'abonné mobile à l'intérieur du réseau, appelé MSIN.

Les "roamers" internationaux présentent en effet un code MCC distinct de celui du réseau de l'opérateur considéré. Les "roamers" nationaux présentent quant à eux un code MCC identique à celui du réseau de l'opérateur considéré, mais un code MNC distinct, qui permet au contrôleur de les identifier.

Lorsque le contrôleur 11 détermine que l'IMSI du terminal mobile 20 présente des codes MCC et MNC caractéristiques des abonnés de l'opérateur considéré, il consulte une base de données située au niveau du réseau coeur 12, afin de déterminer si l'utilisateur du terminal mobile 20 est ou non abonné au service de couverture radio résidentielle Home Gateway. Une telle base de données peut être centralisée, et interrogeable par l'ensemble des contrôleurs dans le cas où plusieurs contrôleurs ont été déployés pour gérer l'ensemble des bornes d'accès privées HG. Les abonnés présents dans la base de données sont les abonnés au service, et les abonnés absents sont considérés comme non abonnés au service.

Dans un deuxième mode de réalisation, le contrôleur 11 procède comme dans le premier mode de réalisation pour l'identification des "roameurs" internationaux et nationaux, sur la base de leur IMSI. En revanche, pour les utilisateurs présentant des codes MCC et MNC caractéristiques des abonnés de l'opérateur considéré, le contrôleur 11 identifie ceux des utilisateurs qui sont abonnés au service en fonction du numéro MSIN figurant dans l'IMSI. Dans ce mode de réalisation, on prévoit en effet d'affecter à certains des 10 digits du numéro MSIN une valeur caractéristique du service de couverture radio résidentielle. Ainsi, certaines tranches d'IMSI sont donc réservées aux abonnés au service. Si le(s) préfixe(s) réservé(s) aux abonnés au service sont déclarés au niveau du contrôleur 11, ce dernier est capable de discriminer les abonnés au service à partir de l'IMSI de l'abonné, sans interrogation de base externe.

L'accès du terminal mobile 20 à la borne d'accès privée HG considérée est donc refusé 24 par le contrôleur 11 si:
- l'utilisateur du terminal mobile 20 est abonné de l'opérateur et est abonné au service de couverture radio résidentielle, mais ne fait pas partie des utilisateurs autorisés sur la Home Gateway considérée;
- l'utilisateur du terminal mobile 20 n'est pas abonné de l'opérateur;
- l'utilisateur du terminal mobile 20 est abonné de l'opérateur, mais n'a pas souscrit au service de couverture radio résidentielle.

Dans ce cas, le contrôleur 11 envoie au terminal mobile 20 un message 25 de refus de mise à jour de localisation "Location Updating Reject", qui contient une cause spécifique de rejet, en fonction de la catégorie déterminée pour l'utilisateur.

On peut par exemple utiliser les causes de rejet #11, #12, #13 et #15 prévues dans la spécification 3GPP TS 24.008 citée ci-dessus (§4.4.4.7 "Location updating not accepted by the network" et annexe G).

Ainsi, les "roamers" nationaux ou internationaux, ainsi que les non abonnés au service de couverture radio résidentielle, peuvent être rejetés avec une cause #11, intitulée "PLMN not allowed", qui a pour effet de faire stocker au terminal mobile 20 l'identifiant du PLMN du réseau d'accès dédié au service dans une liste de PLMN interdits ("forbidden PLMN list"). Ainsi, les "roamers" et les non abonnés au service sont rejetés de façon quasi-permanente (i.e. jusqu'à extinction et allumage du terminal mobile 20, qui a pour effet de réactualiser cette liste) sur le réseau des Home Gateways HG1 à HG3. On les force ainsi à rester au niveau du réseau UMTS "macro" de l'opérateur. En effet, quand un PLMN est mémorisé dans la liste des PLMN interdits, les signaux issus de ses cellules ne sont plus mesurés au niveau radio.

Les abonnés de la catégorie "abonnés au service" peuvent être rejetés avec une cause #15 ("no suitable cells in this Location Area") ou #12 ("Location Area not allowed") ou #13 ("roaming not allowed in this Location Area"), de façon à les rejeter sur la Home Gateway considérée, mais à ne pas les bloquer sur une autre Home Gateway, celle de leur maison par exemple.

L'utilisateur est donc bloqué au niveau d'une zone de localisation LA, i.e. d'une Home Gateway particulière, qui lui est interdite. Cependant, en approchant de la borne d'accès privée de son entreprise ou de son domicile, sur laquelle il est mémorisé comme utilisateur autorisé, il peut tenter de s'attacher à cette Home Gateway de façon classique.

Le mécanisme de contrôle d'accès de l'invention s'avère donc particulièrement efficace, puisque la mise en place du service de couverture radio résidentielle n'a alors pas d'impact sur les performances des terminaux mobiles des non abonnés au service. En effet, après un premier rejet lors d'une première tentative de connexion à une Home Gateway, les non abonnés au service ne tentent plus de s'attacher inutilement à ces bornes d'accès privées, dont la présence ne les perturbe donc plus.

On pourrait bien sûr également envisager d'autres causes de rejet que celles qui sont déjà prévues dans la spécification 3GPP précitée, qui ne sont citées ici qu'à titre d'exemple.

L'homme du métier transposera sans difficulté la description faite ci-dessus d'un mode de réalisation dans lequel le contrôle d'accès à une borne privée en fonction de la catégorie déterminée pour un utilisateur est réalisé dans un contrôleur, au cas où ce contrôle d'accès est réalisé exclusivement dans les bornes d'accès privées. Les moyens mis en oeuvre et les messages échangés avec le terminal mobile sont en effet les mêmes, mais au niveau de la borne d'accès privée, et non plus du contrôleur.

Selon une implémentation particulière de l'invention, les étapes du procédé de contrôle d'accès de l'invention sont déterminées par les instructions d'un programme d'ordinateur incorporé dans un dispositif de traitement de données tel que le contrôleur 11. Le programme comporte des instructions de programme qui, lorsque ledit programme est chargé et exécuté dans le dispositif dont le fonctionnement est alors commandé par l'exécution du programme, réalisent les étapes du procédé selon l'invention.

En conséquence, l'invention s'applique également à un programme d'ordinateur, notamment un programme d'ordinateur sur ou dans un support d'enregistrement d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

## Revendications

1. Système de contrôle d'accès à un service, ledit service étant accessible via une pluralité de bornes privées (HG1, HG2, HG3) d'accès à un réseau de communication, ledit système comprenant :
- des moyens d'agrégation desdites bornes privées (HG1, HG2, HG3) en un réseau d'accès dédié audit service (PLMN) ;
- des moyens d'association d'une zone de localisation distincte (LA1, LA2, LA3) à chacune desdites bornes privées ; et
- des moyens, activés lors d'une procédure de mise à jour de localisation initiée (21) par un terminal d'utilisateur (1-4; 20) :
- de détermination d'une catégorie à laquelle appartient ledit utilisateur, ladite catégorie dépendant au moins du fait que l'utilisateur est ou non abonné audit service ; et
- de contrôle d'accès dudit terminal d'utilisateur à l'une desdites bornes privées, en fonction de la catégorie déterminée ;
ledit système étant **caractérisé en ce que**, en cas de refus d'accès (24) dudit terminal d'utilisateur (1-4; 20) à l'une desdites bornes privées (HG1, HG2, HG3), lesdits moyens de contrôle d'accès sont aptes à envoyer audit terminal un message de refus (25) comprenant une cause de rejet qui est fonction de la catégorie déterminée pour ledit utilisateur.

2. Système selon la revendication 1, **caractérisé en ce que** lesdits moyens de détermination comprennent des moyens de comparaison d'au moins un identifiant de l'utilisateur avec un identifiant de référence associé au service.

3. Système selon la revendication 2, **caractérisé en ce que** les moyens de détermination comprennent également des moyens de recherche d'un utilisateur dans une base de données des abonnés au service.

4. Système selon la revendication 1, **caractérisé en ce que** lesdits moyens de détermination sont aptes à déterminer si ledit utilisateur appartient à une liste d'au moins un utilisateur autorisé à accéder à ladite borne privée.

5. Système selon la revendication 1, **caractérisé en ce qu'**il comprend au moins un contrôleur (11) associé auxdites bornes privées, apte à mettre en oeuvre lesdits moyens de détermination de catégorie et lesdits moyens de contrôle d'accès.

6. Système selon la revendication 1, **caractérisé en ce que** lesdits moyens de détermination de catégorie et lesdits moyens de contrôle d'accès sont inclus dans lesdites bornes privées.

7. Procédé de contrôle d'accès à un service, ledit service étant accessible via une pluralité de bornes privées d'accès à un réseau de communication, ledit procédé comprenant :
- une étape d'agrégation desdites bornes privées (HG1-HG3) en un réseau d'accès dédié audit service ;
- une étape d'association d'une zone de localisation distincte (LA1-LA3) à chacune desdites bornes privées ; et
- lors d'une procédure de mise à jour de localisation initiée (21) par un terminal d'utilisateur (20) :
- une étape de détermination d'une catégorie à laquelle appartient ledit utilisateur, ladite catégorie dépendant au moins du fait que l'utilisateur est ou non abonné audit service ; et
- une étape de contrôle d'accès dudit terminal d'utilisateur à l'une desdites bornes privées, en fonction de la catégorie déterminée ;
ledit procédé étant **caractérisé en ce que**, en cas de refus d'accès (24) dudit terminal d'utilisateur (1-4; 20) à l'une desdites bornes privées (HG1, HG2, HG3), ladite étape de contrôle d'accès comprend un envoi audit terminal d'un message de refus (25) comprenant une cause de rejet qui est fonction de la catégorie déterminée pour ledit utilisateur.

8. Borne d'accès à un réseau de communication, ladite borne étant une borne d'accès privée appartenant à un ensemble de bornes privées d'accès à un service dudit réseau, agrégées en un réseau d'accès dédié audit service, et à chacune desquelles est associée une zone de localisation distincte (LA1-LA3), et étant apte à mettre en oeuvre, lors d'une procédure de mise à jour de localisation initiée (21) par un terminal d'utilisateur (20) :
- des moyens de détermination d'une catégorie à laquelle appartient ledit utilisateur, ladite catégorie dépendant au moins du fait que l'utilisateur est ou non abonné audit service ; et
- des moyens de contrôle d'accès dudit terminal d'utilisateur à l'une desdites bornes privées, en fonction de la catégorie déterminée ;
ladite borne d'accès étant **caractérisée en ce que** lesdits moyens de contrôle d'accès sont aptes, en cas de refus d'accès (24) dudit terminal d'utilisateur (1-4; 20) à l'une desdites bornes privées (HG1, HG2, HG3), à envoyer audit terminal un message de refus (25) comprenant une cause de rejet qui est fonction de la catégorie déterminée pour ledit utilisateur.

9. Programme d'ordinateur comprenant des instructions de code de programme pour la mise en oeuvre des étapes du procédé de contrôle d'accès selon la revendication 7, lorsque ledit programme est exécuté par un ordinateur.

10. Système selon la revendication 1, **caractérisé en ce que** lesdits moyens de détermination et lesdits moyens de contrôle d'accès sont mis en oeuvre par un contrôleur (11) relié auxdites bornes privées à travers au moins un réseau IP.

## Patentansprüche

1. System zur Steuerung des Zugangs zu einem Dienst, wobei der Dienst über mehrere private Anschlussstellen (HG1, HG2, HG3) für den Zugang zu einem Kommunikationsnetz zugänglich ist, wobei das System Folgendes umfasst:
- Mittel zur Zusammenfassung der privaten Anschlussstellen (HG1, HG2, HG3) zu einem dezidierten Zugangsnetz für den Dienst (PLMN);
- Mittel zur Zuordnung einer eigenen Lokalisierungszone (LA1, LA2, LA3) zu jeder der privaten Anschlussstellen; und
- bei einem durch ein Benutzerendgerät (1-4; 20) initiierten (21) Vorgang der Aktualisierung der Lokalisierung aktivierte Mittel:
- zur Bestimmung einer Kategorie, welcher der Benutzer angehört, wobei die Kategorie mindestens von der Tatsache abhängt, ob der Benutzer ein Teilnehmer des Dienstes ist oder nicht; und
- zur Steuerung des Zugangs des Benutzerendgeräts zu einer der privaten Anschlussstellen in Abhängigkeit von der bestimmten Kategorie;
wobei das System **dadurch gekennzeichnet ist, dass** im Fall einer Verweigerung des Zugangs (24) des Benutzerendgeräts (1-4; 20) zu einer der privaten Anschlussstellen (HG1, HG2, HG3) die Mittel zur Steuerung des Zugangs imstande sind, an eine Verweigerungsnachricht (25) das Endgerät zu senden, die einen Zurückweisungsgrund enthält, der von der für den Benutzer bestimmten Kategorie abhängt.

2. System nach Anspruch 1, **dadurch gekennzeichnet, dass** die Bestimmungsmittel Mittel zum Vergleichen mindestens einer Kennung des Benutzers mit einer dem Dienst zugeordneten Referenzkennung umfassen.

3. System nach Anspruch 2, **dadurch gekennzeichnet, dass** die Bestimmungsmittel auch Mittel zum Suchen eines Benutzers in einer Datenbank der Dienstteilnehmer umfassen.

4. System nach Anspruch 1, **dadurch gekennzeichnet, dass** die Bestimmungsmittel imstande sind, zu bestimmen, ob der Benutzer zu einer Liste von mindestens einem Benutzer gehört, der zum Zugang zu der privaten Anschlussstelle berechtigt ist.

5. System nach Anspruch 1, **dadurch gekennzeichnet, dass** es mindestens eine den privaten Anschlussstellen zugeordnete Steuerungseinrichtung (11) umfasst, die imstande ist, die Kategoriebestimmungsmittel und die Zugangssteuerungsmittel einzusetzen.

6. System nach Anspruch 1, **dadurch gekennzeichnet, dass** die Kategoriebestimmungsmittel und die Zugangssteuerungsmittel in den privaten Anschlussstellen enthalten sind.

7. Verfahren zur Steuerung des Zugangs zu einem Dienst, wobei der Dienst über mehrere private Anschlussstellen für den Zugang zu einem Kommunikationsnetz zugänglich ist, wobei das Verfahren Folgendes umfasst:
- einen Schritt des Zusammenfassens der privaten Anschlussstellen (HG1-HG3) zu einem dezidierten Zugangsnetz für den Dienst;
- einen Schritt des Zuordnens einer eigenen Lokalisierungszone (LA1-LA3) zu jeder der privaten Anschlussstellen; und
- bei einem durch ein Benutzerendgerät (20) initiierten (21) Vorgang der Aktualisierung der Lokalisierung:
- einen Schritt des Bestimmens einer Kategorie, welcher der Benutzer angehört, wobei die Kategorie mindestens von der Tatsache abhängt, ob der Benutzer ein Teilnehmer des Dienstes ist oder nicht; und
- einen Schritt des Steuerns des Zugangs des Benutzerendgeräts zu einer der privaten Anschlussstellen in Abhängigkeit von der bestimmten Kategorie;
wobei das Verfahren **dadurch gekennzeichnet ist, dass** im Fall einer Verweigerung des Zugangs (24) des Benutzerendgeräts (1-4; 20) zu einer der privaten Anschlussstellen (HG1, HG2, HG3) der Schritt des Steuerns des Zugangs ein Senden einer Verweigerungsnachricht (25) an das Endgerät umfasst, die einen Zurückweisungsgrund enthält, der von der für den Benutzer bestimmten Kategorie abhängt.

8. Anschlussstelle für den Zugang zu einem Kommunikationsnetz, wobei die Anschlussstelle eine private Zugangsanschlussstelle ist, die zu einer Gruppe von privaten Anschlussstellen für den Zugang zu einem Dienst des Netzes gehört, die zu einem dezidierten Zugangsnetz für den Dienst zusammengefasst sind, und wobei jeder von ihnen eine eigene Lokalisierungszone (LA1-LA3) zugeordnet ist, und wobei sie imstande ist, bei einem von einem Benutzerendgerät (20) initiierten (21) Vorgang der Aktualisierung der Lokalisierung Folgendes einzusetzen:
- Mittel zur Bestimmung einer Kategorie, welcher der Benutzer angehört, wobei die Kategorie mindestens von der Tatsache abhängt, ob der Benutzer ein Teilnehmer des Dienstes ist oder nicht; und
- Mittel zur Steuerung des Zugangs des Benutzerendgeräts zu einer der privaten Anschlussstellen in Abhängigkeit von der bestimmten Kategorie;
wobei die Zugangsanschlussstelle **dadurch gekennzeichnet ist, dass** die Zugangssteuerungsmittel im Fall einer Verweigerung des Zugangs (24) des Benutzerendgeräts (1-4; 20) zu einer der privaten Anschlussstellen (HG1, HG2, HG3) imstande sind, eine Verweigerungsnachricht (25) an das Endgerät zu senden, die einen Zurückweisungsgrund enthält, der von der für den Benutzer bestimmten Kategorie abhängt.

9. Computerprogramm, umfassend Programmcode-Anweisungen zur Durchführung der Schritte des Verfahrens zur Steuerung des Zugangs nach Anspruch 7, wenn das Programm von einem Computer ausgeführt wird.

10. System nach Anspruch 1, **dadurch gekennzeichnet, dass** die Bestimmungsmittel und die Zugangssteuerungsmittel von einer Steuerungseinrichtung (11) eingesetzt werden, die durch mindestens ein IP-Netz mit den privaten Anschlussstellen verbunden ist.

## Claims

1. A system for controlling access to a service, said service being accessible via a plurality of private terminals (HG1, HG2, HG3) for accessing a communication network, said system comprising:
- means for aggregating said private terminals (HG1, HG2, HG3) into an access network dedicated to said service (PLMN);
- means for associating a distinct localisation zone (LA1, LA2, LA3) with each of said private terminals; and
- means, activated during a localisation update procedure initiated (21) by a user terminal (1-4; 20):
- for determining a category to which said user belongs, said category depending at least on whether the user is a subscriber to said service or not; and
- for controlling access of said user terminal to one of said private terminals, as a function of the category determined;
said system being **characterised in that**, in case of said user terminal (1-4; 20) being denied access (24) to one of said private terminals (HG1, HG2, HG3), said access controlling means are able to send to said user terminal a deny message (25) comprising a rejection cause which is a function of the category determined for said user.

2. The system according to claim 1, **characterised in that** said determining means comprise means for comparing at least one identifier of the user with one reference identifier associated with the service.

3. The system according to claim 2, **characterised in that** the determining means also comprise means for searching for a user in a service subscriber database.

4. The system according to claim 1, **characterised in that** said determining means are able to determine whether said user belongs to a list of at least one user allowed to access said private terminal.

5. The system according to claim 1, **characterised in that** it comprises at least one controller (11) associated with said private terminals, able to implement said category determining means and said access controlling means.

6. The system according to claim 1, **characterised in that** said category determining means and said access controlling means are included in said private terminals.

7. A method for controlling access to a service, said service being accessible via a plurality of private terminals for accessing a communication network, said method comprising:
- a step of aggregating said private terminals (HG1-HG3) into an access network dedicated to said service;
- a step of associating a distinct localisation zone (LA1-LA3) with each of said private terminals; and
- during a localisation update procedure initiated (21) by a user terminal (20):
- a step of determining a category to which said user belongs, said category depending at least on whether the user is a subscriber to said service or not; and
- a step of controlling access of said user terminal to one of said private terminals, as a function of the category determined;
said method being **characterised in that**, in case of said user terminal (1-4; 20) being denied access (24) to one of said private terminals (HG1, HG2, HG3), said access controlling step comprises sending to said user terminal a deny message (25) comprising a rejection cause which is a function of the category determined for said user.

8. A terminal for accessing a communication network, said terminal being a private access terminal belonging to a set of private terminals for accessing a service of said network, aggregated into an access network dedicated to said service, and with each of which a distinct localisation zone (LA1-LA3) is associated, and being able to implement, during a localisation update procedure initiated (21) by a user terminal (20):
- means for determining a category to which said user belongs, said category depending at least on whether the user is a subscriber to said service or not; and
- means for controlling access of said user terminal to one of said private terminals, as a function of the category determined;
said access terminal being **characterised in that** said access controlling means are able, in case of said user terminal (1-4; 20) being denied access (24) to one of said private terminals (HG1, HG2, HG3), to send to said user terminal a deny message (25) comprising a rejection cause which is a function of the category determined for said user.

9. A computer program comprising program code instructions for implementing steps of the access controlling method according to claim 7, when said program is executed by a computer.

10. The system according to claim 1, **characterised in that** said determining means and said access controlling means are implemented by a controller (11) connected to said private terminals through at least one IP network.
